Europäisches Patentamt

(19) European Patent Office

Office européen des brevets

(11) Publication number: **0 022 611**
**B1**

(12) **EUROPEAN PATENT SPECIFICATION**

(45) Date of publication of patent specification: **13.07.83**

(21) Application number: **80301664.1**

(22) Date of filing: **20.05.80**

(51) Int. Cl.³: **H 01 C 7/02, H 01 C 7/13, H 05 B 3/14, G 05 D 23/24**

(54) Electrical devices comprising PTC conductive polymer elements.

(30) Priority: **21.05.79 US 41071**

(43) Date of publication of application:
**21.01.81 Bulletin 81/3**

(45) Publication of the grant of the patent:
**13.07.83 Bulletin 83/28**

(84) Designated Contracting States:
**BE CH DE FR GB IT LI NL SE**

(56) References cited:
**DE - A - 2 634 932**
**FR - A - 1 509 654**
**FR - A - 2 335 022**
**GB - A - 2 019 176**

(73) Proprietor: **RAYCHEM CORPORATION**
**300 Constitution Drive**
**Menlo Park California 94025 (US)**

(72) Inventor: **Walker, Jack McLean**
**247 Echo Lane**
**Portola Valley California (US)**

(74) Representative: **Jay, Anthony William**
**RAYCHEM Limited Faraday Road Dorcan**
**Swindon Wiltshire (GB)**

Courier Press, Leamington Spa, England.

Electrical devices comprising PTC conductive polymer elements

This invention relates to electrical devices comprising a layer of a conductive polymer and a sheet electrode in contact with each face of the layer.

Such devices are known and include for example heaters and circuit control devices. Frequently the conductive polymer comprises PTC (positive temperature co-efficient of resistance) material. Reference may be made to U.S. Patent Nos. 2,978,665 (Vernet et al.), 3,243,753 (Kohler), 3,311,862 (Rees), 3,351,882 (Kohler et al.), 4,017,715 (Whitney et al.) and 4,177,376 (Horsma et al).

We have now discovered that the behavior of such a device can be markedly influenced by the shape of the PTC conductive polymer layer adjacent the sheet electrodes, especially when the device is a circuit control device which is subject to high electrical stress. In particular we have found that improved performance is obtained if the electrodes extend to the side of said layer and at least a part of the side of said layer is concave so that the angle between the side of said layer and the electrode is less than 90°, preferably less than 80°, around at least part of the periphery of the device. Such a configuration is preferably present around at least 50%, especially substantially 100%, of the periphery of the device. It is believed that, by so shaping the sides of the conductive polymer layer, the likelihood of forming a "hot zone" in close proximity to the edges of the electrodes (with the resultant danger of arcing and other deleterious effects) is substantially reduced. When a PTC element is heated by passage of current through it to a temperature at which it is self-regulating, a very large proportion of the voltage drop over the PTC element takes place over a very small proportion of the element. This small proportion is referred to herein as a "hot zone" and has been referred to in the prior art as a "hot line" or "hot plane".

The invention is particularly valuable when the PTC conductive polymer layer is thin, e.g. 0.015 to 0.5 cm, preferably 0.025 to 0.25 cm, thick and of relatively large area, e.g. 0.3 to 26 cm$^2$, preferably 1 to 10 cm$^2$. Such dimensions are those typically required for a circuit control device, whose resistance should be very small in the normal operating condition of the circuit, preferably less than 50 ohms, e.g. 0.001 to 25 ohms, at 23°C. Preferably the ratio of the equivalent diameter (d) to the thickness (t) is at least 2, preferably at least 10, especially at least 20. The term "equivalent diameter" means the diameter of a circle having the same area as the minimum cross-sectional area of the PTC element.

Suitable PTC conductive polymers are disclosed in the prior art. Preferably they are melt-processable and have a resistivity at 23°C of less than 100 ohm . cm, especially less than 10 ohm . cm. They may be cross-linked or substantially free from cross-linking.

The sheet electrodes used in the present invention are generally composed of a metal, e.g. nickel or nickel-plated copper, or another material having a resistivity of less than $10^{-4}$ ohm . cm. It is to be understood that when this specification refers to the electrodes as being in contact with the PTC layer, this does not exclude the possibility of a metal electrode which is separated from the PTC layer by a thin layer of another conductive material, e.g. a layer of a relatively constant wattage (ZTC) conductive polymer. Often the electrodes will have openings therein to improve electrical and physical contact between the electrodes and the PTC conductive polymer layer. The electrodes will usually be planar, parallel to each other and of the same dimensions where they contact the PTC layer. In circuit control devices the electrodes may for example have an area of 0.05 to 4.0 inch$^2$ and a length and width of 0.25 to 2.0 inch. Preferably at least one dimension of each electrode is at least 2 times, especially at least 5 times, the thickness of the PTC layer. Where the electrode extends beyond the sides of the PTC element, these dimensions refer to the parts of the electrode which are in contact with the PTC layer.

The devices of the invention can be made by any suitable method. Thus the device can be made with the sides of the PTC element square or convex, and some or (preferably) all of the sides then milled or otherwise shaped to the desired concave shape. A continuous method of making a laminate of two sheet electrodes and a concave-sided layer of a conductive polymer is disclosed in European Application 80301665.8 filed contemporaneously herewith and also corresponding to U.S. Serial No. 41,071. A continuous laminate made in this way can be cut to length, and preferably the cut sides of the PTC element milled to the desired concave shape.

The concave sides of the PTC element can be of any concave shape. For example they can be smoothly concave or V-shaped. The angle between the side of the PTC element and the electrode is preferably less than 80°, especially less than 70°, particularly less than 60°. Increasing the extent of the concavity is an additional aid in reducing the likelihood of hot zone formation adjacent the electrodes, but also results in a device of higher resistance, which is undesirable for circuit control devices. Preferably the extent of the concavity is such that the minimum cross-sectional area of the PTC element is 0.3 to 0.99 times, particularly 0.6 to 0.96 times, its cross-sectional area adjacent the electrodes.

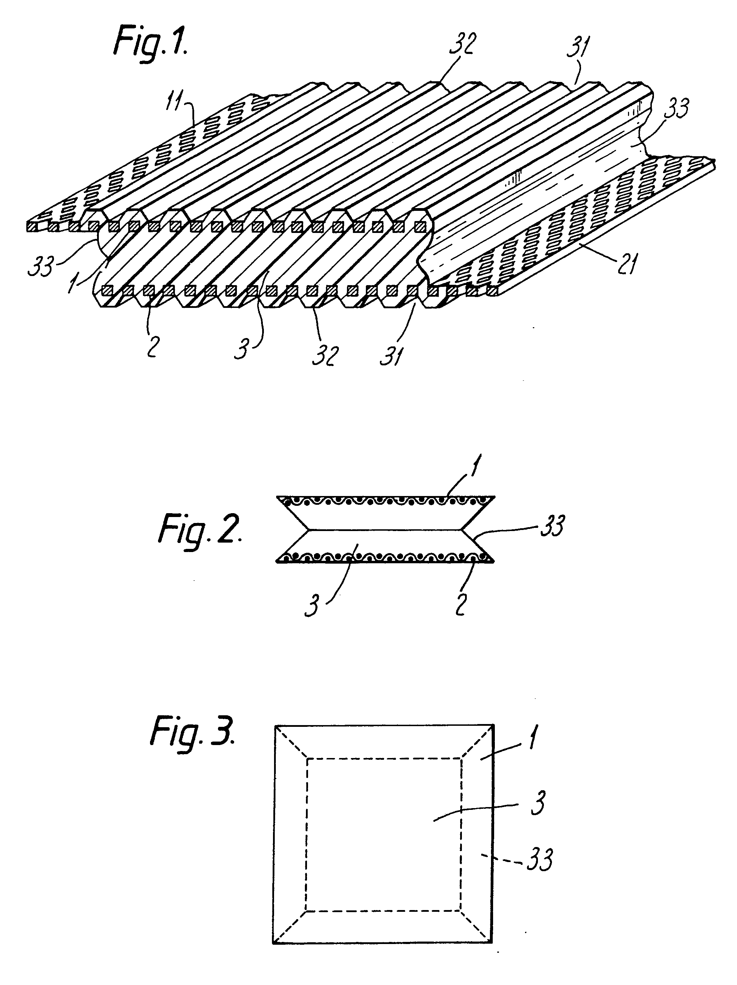

The invention is illustrated in the accompanying drawings in which metal mesh sheet electrodes 1 and 2 are in contact with opposite faces of PTC conductive polymer element 3 having concave sides 33. Referring now to Figure 1, this is a perspective view, partly in cross-section, of an electrical device in which the electrodes 1 and 2 have edge portions 11 and 21 respectively which extend beyond the concave edges 33 of the PTC element 3; in areas 32, the conductive polymer has penetrated into and through the openings in the electrode, and in areas 31, the conductive polymer has penetrated into but not through the openings in the electrode. Figures 2 and 3 are side and plan views respectively of another device of the invention, in which metal mesh electrodes 1 and 2 extend to (but not beyond) the edges of the PTC element 3, which has V-shaped edges around the whole of the periphery thereof; in practice, the shape of the grooves will not be as precise as is shown in Figure 2.

The invention is further illustrated by the accompanying Examples, in which Example 1 is a comparative Example.

Example 1 (comparative)

The following ingredients were used to prepare a PTC conductive polymer composition.

|  | Wt (g) | Wt % | Vol % |
|---|---|---|---|
| Ethylene/acrylic acid copolymer (EAA 455) | 4687 | 29.7 | 38.3 |
| High density polyethylene (Marlex 6003) | 3756 | 23.8 | 29.7 |
| Carbon Black (Furnex N765) | 7022 | 44.5 | 29.7 |
| Antioxidant | 316 | 2.0 | 2.3 |

Notes

EAA 455, which is available from Dow Chemical, is a copolymer of ethylene and acrylic acid (about 8% by weight) having a melt index of about 5.5

Furnex N765 (available from Cities Service Co.) has a particle size (D) of 60 millimicrons, a density of 1.8 g/cc, and a surface area (s) of 32 $m^2$/g

Marlex 6003 is a high density polyethylene with a melt index of 0.3 which is available from Phillips Petroleum Company

The antioxidant used was an oligomer of 4,4-thio bis(3-methyl-6-t-butyl phenol) with an average degree of polymerization of 3—4, as described in U.S. Patent No. 3,986,981.

The ingredients were introduced into a steam pre-heated 11.3 kg Banbury mixer. After the torque had increased considerably, the steam was turned off and water cooling was begun. Mixing was continued for a further 6 minutes in 3rd gear before the composition was dumped, placed on a steam-heated mill, extruded into a water bath through a 8.9 cm extruder fitted with a pelletizing die, and chopped into pellets. The pellets were dried under vacuum at 60°C for 18 hours prior to extrusion.

Using a 1.9 cm Brabender extruder and a 1×0.25 cm die, the pellets were extruded into a tape. Nickel mesh electrodes, 1.6 cm wide, were laminated to each face of the freshly extruded tape, using a stepped roller apparatus as described in the Example of the contemporaneously filed European Application 80301665.8, to produce a laminate having square sides, as shown in Figure 2 of that application.

The laminate was cut into 1.9 cm lengths and tin-plated copper leads were spot welded to the portions of the electrodes extending beyond the sides of the PTC layer. Using a $Co^{60}$ gamma radiation source, the samples were irradiated to 20 Mrad, thereby cross-linking the PTC composition. After drying in vacuum at 50°C for 16 hours, the devices were encapsulated with an epoxy resin and heated at 110°C for 3 hours to cure the epoxy resin.

Example 2

The procedure of Example 1 was followed except that as the laminate of the electrodes and the PTC element emerged from the stepped roller apparatus, a thin disc having a convex edge was rotated in contact with each side of the PTC element, which was still hot, thereby producing a groove about 0.05 cm deep in each side of the laminate, as shown in Figure 1 of the accompanying drawings.

A number of devices made by the procedures of Examples 1 and 2 were tested to determine their ability to provide repeated protection against fault currents of 5, 10 and 15 amps. The grooved devices of Example 2 were substantially superior to the devices of Example 1.

**Claims**

1. An electrical device comprising a layer of a conductive polymer composition which exhibits PTC behavior and a sheet electrode in contact with each face of said layer, characterised in that the electrodes extend to the side of said layer and at least a part of the side of said layer is concave so that the angle between the side of said layer and the electrode is less than 90°, around at least part of the periphery of the device.

2. A device according to Claim 1 characterised in that said angle is less than 80°.

3. A device according to Claim 1 or 2 characterised in that at least one dimension of each electrode is at least 5 times the thickness of said layer.

4. A device according to Claim 1, 2 or 3 characterised in that the equivalent diameter of each electrode is at least 2 times the thickness of said layer.

5. A device according to any one of the preceding claims characterised by having a resistance at 23°C of less than 25 ohms.

6. A device according to any one of the preceding claims characterised in that said layer is 0.025 to 0.5 cm thick and has a cross-sectional area of 1 to 10 cm² and is composed of a conductive polymer having a resistivity at 23°C of less than 10 ohm . cm.

7. A device according to any one of the preceding claims characterised in that the minimum cross-sectional area of said layer is 0.6 to 0.96 times its cross-sectional area adjacent the electrodes.

8. A device according to any one of the preceding claims characterized in that the angle between the side of the conductive polymer layer and the electrode is less than 80° around at least 50% of the periphery of the device.

9. A device according to Claim 8 characterised in that the angle between the side of the conductive polymer layer and the electrode is less than 80° around substantially 100% of the periphery of the device.

## Patentansprüche

1. Elektrische Vorrichtung mit einer Schicht aus einem leitenden Polymerisat, die ein Kaltleiterverhalten hat, und einer flächenhaften Elektrode in Kontakt mit jeder Fläche der Schicht, dadurch gekennzeichnet, daß sich die Elektroden zu der Seite der erwähnten Schicht erstrecken und mindestens ein Teil der Seite dieser Schicht konkav ist, so daß der Winkel zwischen der Seite der Schicht und der Elektrode geringer als 90° ist zumindest um einen Teil des Umfangs der Vorrichtung herum.

2. Vorrichtung nach Anspruch 1, dadurch gekennzeichnet, daß der erwähnte Winkel weniger als 80° beträgt.

3. Vorrichtung nach Anspruch 1 oder 2, dadurch gekennzeichnet, daß zumindest eine Abmessung jeder Elektrode mindestens das 5-fache der Dicke der Schicht beträgt.

4. Vorrichtung nach Anspruch 1, 2 oder 3, dadurch gekennzeichnet, daß der äquivalente Durchmesser jeder Elektrode mindestend das Zweifache der Dicke Der Schicht beträgt.

5. Vorrichtung nach einem oder mehreren der vorangehenden Ansprüche, dadurch gekennzeichnet, daß diese bei 23°C einen Widerstand von weniger als 25 Ohm hat.

6. Vorrichtung nach einem oder mehreren der vorangehenden Ansprüche, dadurch gekennzeichnet, daß die erwähnte Schicht eine Dicke von 0,025 bis 0,5 cm und eine Querschnittsfläche von 1 bis 10 cm² hat und aus einem leitenden Polymerisat zusammengesetzt ist, das bei 23°C einen spezifischen Widerstand von weniger als 10 Ohmzentimeter hat.

7. Vorrichtung nach einem oder mehreren der vorangehenden Ansprüche, dadurch gekennzeichnet, daß die Mindestquerschnittsfläche der Schicht das 0,6 bis 0,96-fache ihrer den Elektroden benachbarten Querschnittsfläche beträgt.

8. Vorrichtung nach einem oder mehreren der vorangehenden Ansprüche, dadurch gekennzeichnet, daß der Winkel zwischen der Seite der leitenden Polymerisatschicht und der Elektrode weniger als 80° um mindestens 50% des Umfangs der Vorrichtung herum beträgt.

9. Vorrichtung nach Anspruch 8, dadurch gekennzeichnet, daß der Winkel zwischen der Seite der leitenden Polymerisatschicht und der Elektrode weniger als 80° um im wesentlichen 100% des Umfangs der Vorrichtung beträgt.

## Revendications

1. Un dispositif électrique comprenant une couche d'une composition polymère conductrice qui présente un comportement à CTP et une électrode en nappe en contact avec chaque face de ladite couche, caractérisé en ce que les électrodes s'étendent jusqu'au côté de ladite couche et au moins une partie du côté de ladite couche est concave de sorte que l'angle entre le côté de ladite couche et l'électrode est inférieur à 90°, autour d'au moins une partie de la périphérie du dispositif.

2. Un dispositif selon la revendication 1, caractérisé en ce que ledit angle est inférieur à 80°.

3. Un dispositif selon la revendication 1 ou 2, caractérisé en ce qu'au moins une dimension de chaque électrode est au moins égale à 5 fois l'épaisseur de ladite couche.

4. Un dispositif selon la revendication 1, 2 ou 3, caractérisé en ce que le diamètre équivalent de chaque électrode est au moins égal à 2 fois l'épaisseur de ladite couche.

5. Un dispositif selon l'une quelconque des revendications précédentes, caractérisé en ce qu'il a une résistance à 23°C inférieure à 25 ohms.

6. Un dispositif selon l'une quelconque des revendications précédentes, caractérisé en ce que ladite couche a une épaisseur comprise entre 0,025 et 0,5 cm et a une surface de section transversale comprise entre 1 et 10 cm² et est composée d'un polymère conducteur ayant, à 23°C, une résistance inférieure à 10 ohms . cm.

7. Un dispositif selon l'une quelconque des revendications précédentes, caractérisé en ce que la surface de la section transversale minimale de ladite couche est comprise entre 0,6 et 0,96 fois la surface de sa section transversale au voisinage des électrodes.

8. Un dispositif selon l'une quelconque des revendications précédentes, caractérisé en ce que l'angle formé entre le côte de la couche de polymère conducteur et l'électrode est inférieure à 80° autour d'au moins 50% de la périphérie du dispositif.

9. Un dispositif selon la revendication 8, caractérisé en ce que l'angle formé entre le côté de la couche de polymère conducteur et l'électrode est inférieur à 80° autour de pratiquement 100% de la périphérie du dispositif.

Fig.1.

Fig.2.

Fig.3.